(19) Europäisches Patentamt / European Patent Office / Office européen des brevets

(11) **EP 4 465 218 B1**

(12) **EUROPEAN PATENT SPECIFICATION**

(45) Date of publication and mention
of the grant of the patent:
**22.07.2026 Bulletin 2026/30**

(21) Application number: **23204836.3**

(22) Date of filing: **20.10.2023**

(51) International Patent Classification (IPC):
$G06Q\ 10/0635$ (2023.01)  $G06F\ 11/34$ (2006.01)

(52) Cooperative Patent Classification (CPC):
**G06Q 10/0635; G06F 11/3457**

(54) **SYSTEM AND METHOD FOR ASSESSMENT OF INFORMATION TECHNOLOGY (IT) OPERATIONAL ENDURANCE OF AN ENTITY**

SYSTEM UND VERFAHREN ZUR BEURTEILUNG DER INFORMATIONSTECHNOLOGIE (IT)-BETRIEBSDAUER EINER EINHEIT

SYSTÈME ET PROCÉDÉ D'ÉVALUATION DE L'ENDURANCE OPÉRATIONNELLE D'UNE TECHNOLOGIE D'INFORMATIONS (IT) D'UNE ENTITÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.05.2023 IN 202321034114**

(43) Date of publication of application:
**20.11.2024 Bulletin 2024/47**

(73) Proprietor: **Tata Consultancy Services Limited Maharashtra (IN)**

(72) Inventors:
- **CHAUDHURI, ABHIK**
  **700 091 Kolkata (IN)**
- **RAVISANKAR, DEVASENA**
  **600 042 Chennai (IN)**
- **KESANI, CHANDRA**
  **30339 Atlanta (IN)**

- **BEDI, KARAN**
  **L4W 0A9 Mississauga (IN)**
- **CSERJES, WILLIAM ATTILA**
  **Edison, 08837 (US)**
- **JAYAKUMAR, NITHIYANAND**
  **08837 Edison (IN)**
- **SANKARAKUTHALAM, BALASUBRAMANIAN**
  **600 042 Chennai (IN)**
- **VENKATACHALAM, PERUMAL**
  **560 100 Bangalore (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2018 114 271**

**Description**

CROSS-REFERENCE TO RELATED APPLICATIONS AND PRIORITY

The present application claims priority to Indian application no. 202321034114, filed on May 15, 2023.

TECHNICAL FIELD

The disclosure herein generally relates to information technology (IT) operations and endurance, and, more particularly, to system and method for assessment of information technology (IT) operational endurance of an entity.

BACKGROUND

Today's business environments are dynamic and highly competitive. But organizations/businesses (also referred as entities and interchangeably used herein) across verticals are facing challenges in dynamically addressing the changing needs of end customers as information technology (IT) services are not able to meet the entities' expectations due to various factors such as legacy systems, operational downtimes, and the like. The need of the hour for entities is a robust IT operation that is dynamically elastic, agile, risk assured and regulatory compliant. Addressing operational endurance and trust through digital transformation is a prime necessity for entities. US2018/114271A1 discloses a computer-implemented method for the calculation and anticipation of losses due to failures (e.g. "adverse events such as an outage, performance degradation, loss/leakage/corruption, compliance issues, etc.) either due to an accident (natural or man-made) or prolonged exposure to risks (such as hackers, etc.)" in an IT system, but does not disclose the specific calculations as claimed.

SUMMARY

Embodiments of the present disclosure present technological improvements as solutions to one or more of the above-mentioned technical problems recognized by the inventors in conventional systems.

For example, in one aspect, there is provided a processor implemented method for assessment of information technology (IT) operational endurance of an entity. The method comprises identifying, via one or more hardware processors, a set of entity data based on one or more responses from an entity to a plurality of queries associated with the entity, wherein the set of entity data comprises a plurality of entity-based industries, a plurality of business service models, and an entity identified prioritization (EIP) score for each business service model amongst the plurality of business service models; identifying, via the one or more hardware processors, one or more relevant business service models amongst the plurality of business service models and the associated EIP score; identifying, via the one or more hardware processors, one or more technology domains associated with the one or more relevant business service models based on one or more responses from the entity to the plurality of queries; computing, via the one or more hardware processors, (i) a first Essential Technology Impact (ETI) score for each of the one or more associated technology domains, (ii) a second ETI score across the one or more associated technology domains, and (iii) a third ETI score for each of the one or more relevant business service models based on the first ETI score and the second ETI score, using one or more predefined tables; computing, via the one or more hardware processors, an Endurance Maturity (EM) score for each of the one or more relevant business service models based on the EIP score and the third ETI score; mapping, via the one or more hardware processors, the computed EM score of each of the one or more relevant business service models to an associated EM level table to identify (i) a current state of one or more operations in the entity to meet one or more business objectives, and (ii) a degree of confidence of the one or more operations to perform the one or more business objectives; and calculating, via the one or more hardware processors, an operational endurance score for the entity based on the computed third ETI score, a maximum attainable value of the third ETI score using the identified current state of the one or more operations, and the identified degree of confidence of the one or more operations.

In an embodiment, the EIP score is calculated using an entity identified prioritization look up table, and wherein the EIP score represents an operational impact of the one or more relevant business service models and an associated revenue.

In an embodiment, the second ETI score is based on a calculated weighted average of a plurality of data points per technology domain for each of the one or more associated technology domains, and wherein the plurality of data points are comprised in the one or more predefined tables.

In an embodiment, the one or more predefined tables comprise a service class lookup table, a dimension-attribute table, and an ETI lookup table.

In an embodiment, the maximum attainable value of the third ETI score for each of the one or more relevant business service models is based on number of dimensions and a highest service class level comprised in the dimension-attribute table and the service class lookup table respectively.

In another aspect, there is provided a processor implemented system for assessment of information technology (IT) operational endurance of an entity. The system comprises: a memory storing instructions; one or more communication interfaces; and one or more hardware processors coupled to the memory via the one or more communication interfaces, wherein the one or more hardware processors are configured by the instructions to: identify a set of entity data based on one or more responses from an entity to a plurality of queries associated with the entity, wherein the set of entity data comprises a plurality of entity-based industries, a plurality of business service models, and an entity identified prioritization (EIP) score for each business service model amongst the plurality of business service models; identify one or more relevant business service models amongst the plurality of business service models and the associated EIP score; identify one or more technology domains associated with the one or more relevant business service models based on one or more responses from the entity to the plurality of queries; compute (i) a first Essential Technology Impact (ETI) score for each of the one or more associated technology domains, (ii) a second ETI score across the one or more associated technology domains, and (iii) a third ETI score for each of the one or more relevant business service models based on the first ETI score and the second ETI score, using one or more predefined tables; compute an Endurance Maturity (EM) score for each of the one or more relevant business service models based on the EIP score and the third ETI score; map the computed EM score of each of the one or more relevant business service models to an associated EM level table to identify (i) a current state of one or more operations in the entity to meet one or more business objectives, and (ii) a degree of confidence of the one or more operations to perform the one or more business objectives; and calculate an operational endurance score for the entity based on the computed third ETI score, a maximum attainable value of the third ETI score using the identified current state of the one or more operations, and the identified degree of confidence of the one or more operations.

In an embodiment, the EIP score is calculated using an entity identified prioritization look up table, and wherein the EIP score represents an operational impact of the one or more relevant business service models and an associated revenue.

In an embodiment, the second ETI score is based on a calculated weighted average of a plurality of data points per technology domain for each of the one or more associated technology domains, and wherein the plurality of data points are comprised in the one or more predefined tables.

In an embodiment, the one or more predefined tables comprise a service class lookup table, a dimension-attribute table, and an ETI lookup table.

In an embodiment, the maximum attainable value of the third ETI score for each of the one or more relevant business service models is based on number of dimensions and a highest service class level comprised in the dimension-attribute table and the service class lookup table respectively.

In yet another aspect, there are provided one or more non-transitory machine-readable information storage mediums comprising one or more instructions which when executed by one or more hardware processors cause assessment of information technology (IT) operational endurance of an entity by identifying a set of entity data based on one or more responses from an entity to a plurality of queries associated with the entity, wherein the set of entity data comprises a plurality of entity-based industries, a plurality of business service models, and an entity identified prioritization (EIP) score for each business service model amongst the plurality of business service models; identifying one or more relevant business service models amongst the plurality of business service models and the associated EIP score; identifying one or more technology domains associated with the one or more relevant business service models based on one or more responses from the entity to the plurality of queries; computing (i) a first Essential Technology Impact (ETI) score for each of the one or more associated technology domains, (ii) a second ETI score across the one or more associated technology domains, and (iii) a third ETI score for each of the one or more relevant business service models based on the first ETI score and the second ETI score, using one or more predefined tables; computing an Endurance Maturity (EM) score for each of the one or more relevant business service models based on the EIP score and the third ETI score; mapping the computed EM score of each of the one or more relevant business service models to an associated EM level table to identify (i) a current state of one or more operations in the entity to meet one or more business objectives, and (ii) a degree of confidence of the one or more operations to perform the one or more business objectives; and calculating an operational endurance score for the entity based on the computed third ETI score, a maximum attainable value of the third ETI score using the identified current state of the one or more operations, and the identified degree of confidence of the one or more operations.

In an embodiment, the EIP score is calculated using an entity identified prioritization look up table, and wherein the EIP score represents an operational impact of the one or more relevant business service models and an associated revenue.

In an embodiment, the second ETI score is based on a calculated weighted average of a plurality of data points per technology domain for each of the one or more associated technology domains, and wherein the plurality of data points are comprised in the one or more predefined tables.

In an embodiment, the one or more predefined tables comprise a service class lookup table, a dimension-attribute table, and an ETI lookup table.

In an embodiment, the maximum attainable value of the third ETI score for each of the one or more relevant business service models is based on number of dimensions and a highest service class level comprised in the dimension-attribute table and the service class lookup table respectively.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for assessment of information technology (IT) operational endurance of an entity, in accordance with an embodiment of the present disclosure.
FIG. 2 depicts an exemplary flow chart illustrating a method for assessment of information technology (IT) operational endurance of an entity, using the system of FIG. 1, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Current business environments are dynamic and highly competitive. But organization/businesses (also referred as entities and interchangeably used herein) across verticals are facing challenges in dynamically addressing the changing needs of end customers with legacy IT technologies and operational downtimes. The need of the hour for entities is a robust IT operation that is dynamically elastic, agile, risk assured and regulatory compliant. Addressing operational endurance and trust through digital transformation is a prime necessity for businesses. Current available methods do not provide mechanisms to quantitatively estimate the current state of alignment of IT operations with the entities' expectations from the IT services for the entity's operational model based on the significance of the operation model to the entity. For example, a retail entity can be operating in the physical store model for decades as their primary and significant revenue generator with a dedicated client base. If the same entity wants to try out an online operating mode for entity with minor focus, then the operating model of physical stores tends to have higher priority to the entity than the online mode. Considering this prioritization of the operating model of business, assessing the current state of IT operations supporting the physical and online models becomes important.

The IT operations of an entity should be agile, risk-managed and aligned with the business/entity objectives and expectations from its operation model that the IT operations is catering to. However, most IT services across entities face challenge to meet the necessary expectations of the entity and other stakeholders including regulatory bodies and end-users. The challenges in the IT operations design, resilience, security, maintainability, technology adaptability and service governance prevent it from having a complete alignment with the entity's needs and objectives.

Based on the entity's priority and current state of IT operations, the disclosed system and method determines the IT service alignment, operational endurance and IT operations trust for each of the operating models. The disclosed system and method dynamically assess the technology services for the IT operations and provide the maturity level of operational endurance to meet the entity's priority and needs for its operation model.

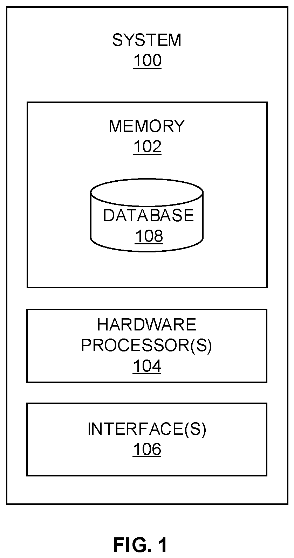

Referring now to the drawings, and more particularly to FIG. 1 through 2, where similar reference characters denote corresponding features consistently throughout the figures, there are shown preferred embodiments and these embodiments are described in the context of the following exemplary system and/or method.

FIG. 1 depicts an exemplary system 100 for assessment of information technology (IT) operational endurance of an entity, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to one or more entities, one or more responses from the one or more entities for a plurality of queries, one or more business service models, technology domain(s), and the like. The database 108 further comprises one or more predefined tables, such as a service class lookup table, a dimension-attribute table, other lookup tables including, an Essential Technology Impact (ETI) lookup table, endurance maturity tables, an entity identified prioritization look up table, various scores such as entity identified prioritization score, Essential Technology Impact (ETI) scores, endurance maturity score(s), operational endurance score, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

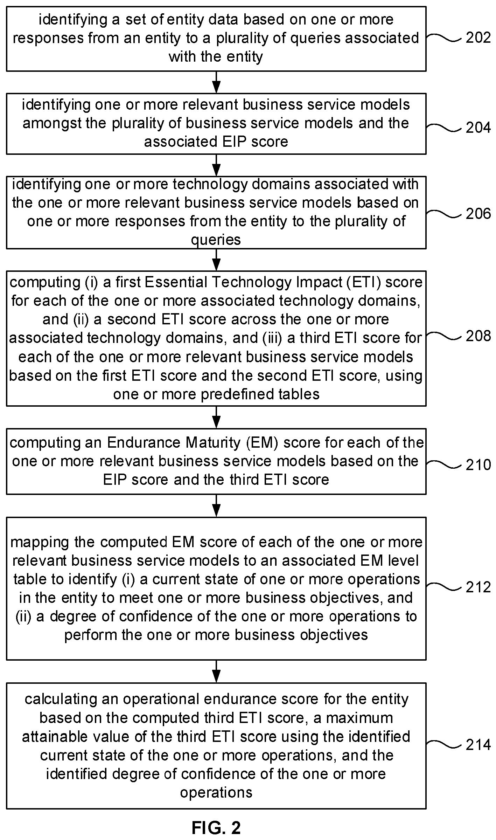

FIG. 2, with reference to FIG. 1, depicts an exemplary flow chart illustrating a method for assessment of information technology (IT) operational endurance of an entity, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2.

At step 202 of the method of the present disclosure, the one or more hardware processors 104 identify a set of entity data based on one or more responses from an entity to a plurality of queries associated with the entity (e.g., client such as an incorporated company, an organization, a financial institution, and the like which are industry agnostic and business/entity specific). The set of entity data comprises a plurality of entity-based industries, a plurality of business service models, and an entity identified prioritization (EIP) score for each business service model amongst the plurality of business service models. The plurality of business service models includes, but are not limited to, store services, delivery center, distribution center, head office/branch office business, data center, third (3$^{rd}$) Party integrations, ecommerce, manufacturing plants, research centers, and the like. In an embodiment of the present disclosure, the plurality of business service models refers to the service components and sub-components that deliver one or more products or services to its customers. It is to be understood by a person having ordinary skill in the art or person skilled in the art that the above exemplary business service models shall not be construed as limiting the scope of the present disclosure.

The entity identified prioritization (EIP) score is a key data point that represents revenue and/or entity's impact to the business, if one or more supporting essential technologies fail and/or do not meet the required business/entity required technology services. The EIP score is obtained by using an entity identified prioritization look up table, in one example embodiment of the present disclosure. The EIP score is a modifier that is applied to the generic industry agnostic ETI (Essential Technologies Impact) score, resulting in a customized industry market segment specific Endurance Maturity (EM) score, that would guide technology solutions in meeting business/entity's service objectives. In other words, the EIP score represents an operational impact of the one or more relevant business service models and an associated revenue. Below Table 1 illustrates the entity identified prioritization look up table that is used to prioritize the entity's business service model with the EIP score as per specific criteria provided under 'Definition'. The EIP score for each business service model is identified based on the impact to the business/entity if a business service model is not available due to operational issues. Every prioritization factor for business service model is assigned an identifier and a corresponding numerical value (NV), with the highest prioritized factor starting with 'Identifier1', decreasing in value to 'Identifier n' due to decreasing criticality or impact.

Table 1

| Prioritization | Definition | Prioritization Scale (EIP) |
|---|---|---|
| Identifier 1 | Definition of Identifier 1 | NV |
| Identifier 2 | Definition of Identifier 2 | NV-1 (referred as NV minus 1) |
| Identifier 3 | Definition of Identifier 3 | NV-2 (referred as NV minus 2) |
| ... | ... | ... |

(continued)

| Prioritization | Definition | Prioritization Scale (EIP) |
|---|---|---|
| Identifier n | Definition of Identifier n | NV- n (referred as NV minus n) |

The prioritization scale may be 0 (N/A for business/entity), 1 - 4, (Baseline - Critical), in an example embodiment of the present disclosure. It is to be understood by a person having ordinary skill in the art or person skilled in the art that the above exemplary prioritization scales shall not be construed as limiting the scope of the present disclosure and may vary depending upon the implementation of the system and method in a specific environment and infrastructure.

At step 204 of the method of the present disclosure, the one or more hardware processors 104 identify (i) one or more relevant business service models amongst the plurality of business service models and (ii) the associated EIP score. The system 100 first identifies what/which industry and what market segments does the entity belong to. Once the industry and market segment has been established, the system 100 identifies one or more relevant business service models do they have. For instance, the one or more relevant business service models may include service models as mentioned above such as store operations/services, delivery center (or delivery center operations), distribution center (or distribution center operations), head office/branch office business, data center, third (3rd) Party integrations, ecommerce (or ecommerce operations), manufacturing plants, research centers, and the like. Such identification of the one or more relevant business service models may also be based on input(s) from the entity (e.g., the selection of one or more relevant business service models may be made by the entity wherein an interface is provided by the system 100 to make the selection and identify the one or more relevant business service models). Further, the associated EIP score is identified. For instance, if revenue loss is > x1% (e.g., say 80%) of Entity's total revenue, due to that business service model being non-operational for any reason, then EIP is highest (NV - refer above Table 1). Another example of identifying the EIP score may include: if revenue loss is between a1% and b1% (e.g., between 50% and 80%) of Entity's total revenue, due to that business service model being non-operational for any reason, then EIP is highest minus 1 (NV - 1). Yet another example of identifying the EIP score may include: if revenue loss is <=y1% wherein value of y1 is say 20% of Entity's total revenue, due to that example of identifying the EIP score may include: being non-operational for any reason, then EIP is lowest (NV - n).

At step 206 of the method of the present disclosure, the one or more hardware processors 104 identify one or more technology domains associated with the one or more relevant business service models based on one or more responses from the entity to the plurality of queries. The one or more technology domains identified for each of the one or more relevant business service model may include but are not limited to server/platform, storage, network, facility, database management system (DBMS), application, middleware, backup, utility, digital workplace, operational technologies, and the like. Such identification of the associated technology domains identified may also be based on input(s) from the entity (e.g., the selection of one or more technology domains identified may be made by the entity wherein an interface is provided by the system 100 to make the selection and identify the one or more associated technology domains identified based on the one or more relevant business service models being identified). Such identification of the one or more relevant business service models and the one or more associated technology domains may also be carried out by one or more trained machine learning models (as known in the art) stored in the memory 102. The machine learning models may be trained with historical data which may comprise of number of business service models and number of technology domains being identified for specific entities, in an embodiment of the present disclosure.

At step 208 of the method of the present disclosure, the one or more hardware processors 104 compute (i) a first Essential Technology Impact (ETI) score for each of the one or more associated technology domains, and (ii) a second ETI score across the one or more associated technology domains, and (iii) a third ETI score for each of the one or more relevant business service models based on the first ETI score and the second ETI score, using one or more predefined tables. The expression 'first ETI score' refers to a dimension specific ETI score for each Technology Domain and herein may be referred as 'T-ETI score'. The expressions the first ETI score and T-ETI score may be interchangeably used herein. To compute the T-ETI score, (i.e., service class level of the technology resource per dimensions), some identified subset of questions (not described herein) is presented to a user/entity. Every question has a weight factor between 'a2' and 'b2' (whose value may be between 0 and 1) that assigns the degree of importance and impact of the question's perspective on the IT operation's endurance. For example, lack of documentation versus a network security weakness due a missed configured firewall, though both are important however network firewall will have a higher significance compared to documentation in respect to IT Operation endurance. Therefore, to properly calculate the T-ETI score for a Technology Domain would require a weighted average calculation.

The expression 'second ETI score' refers to a dimension specific average T-ETI score across technology domains and herein may be referred as 'D-ETI score'. The expressions the second ETI score and D-ETI score may be interchangeably used herein.

The expression 'third ETI score' refers to one or more Operation model specific cumulative D-ETI Scores (O-ETI) and herein may be referred as 'O-ETI score'. The expressions the third ETI score and O-ETI score may be interchangeably used herein. The one or more predefined tables include but are not limited to a service class lookup table, a dimension-attribute table, and an ETI lookup table, and the like. The service class lookup table and the dimension and attribute table are provided in Table 2 and Table 3 respectively.

Table 2

| Dimensions \Service Class | Service Class$_1$ | Service Class$_2$ | Service Class$_3$ | ... | Service Class$_m$ |
|---|---|---|---|---|---|
| Dimension$_1$ | Characteristic $C_{11a}$ Characteristic $C_{11b}$ | Characteristic $C_{12a}$ Characteristic $C_{12b}$ | Characteristic $C_{13a}$ Characteristic $C_{13b}$ | ... | Characteristic $C_{1ma}$ Characteristic $C_{1mb}$ |
| | ... Characteristic $C_{11x}$ | ... ... Characteristic $C_{12x}$ | ... Characteristic $C_{13x}$ | | ... Characteristic $C_{1mx}$ |
| Dimension$_2$ | Characteristic $C_{21a}$ Characteristic $C_{21b}$ ... Characteristic $C_{21x}$ | Characteristic $C_{22a}$ Characteristic $C_{22b}$ ... Characteristic $C_{22x}$ | Characteristic $C_{23a}$ Characteristic $C_{23b}$ ... Characteristic $C_{23x}$ | ... | Characteristic $C_{2ma}$ Characteristic $C_{2mb}$ ... Characteristic $C_{2mx}$ |
| Dimensions | Characteristic $C_{31a}$ Characteristic $C_{31b}$ ... Characteristic $C_{31x}$ | Characteristic $C_{32a}$ Characteristic $C_{32b}$ ... Characteristic $C_{32x}$ | Characteristic $C_{33a}$ Characteristic $C_{33b}$ ... Characteristic $C_{33x}$ | ... | Characteristic $C_{3ma}$ Characteristic $C_{3mb}$ ... Characteristic $C_{3mx}$ |
| ... | ... | ... | ... | ... | ... |
| Dimension$_n$ | Characteristic $Cn_{1a}$ Characteristic $Cn_{1b}$ ... | Characteristic $Cn_{2a}$ Characteristic $Cn_{2b}$ ... | Characteristic $Cn_{3a}$ Characteristic $Cn_{3b}$ ... | ... | Characteristic $C_{nma}$ Characteristic $C_{nmb}$ ... |
| | Characteristic $Cn_{1x}$ | Characteristic $Cn_{2x}$ | Characteristic $Cn_{3x}$ | | Characteristic $C_{nmx}$ |

The dimensions may include but are not limited to, technology alignment, business/entity's resilience, security operations (SecOps), service continuity, adaptability, strategic governance, and the like. It is to be understood by a person having ordinary skill in the art or person skilled in the art that the above exemplary dimensions shall not be construed as limiting the scope of the present disclosure and may vary depending upon the implementation of the system and method in a specific environment and infrastructure.

For each dimension, where i = 1 to n; the service classes are defined by a set of unique characteristics, '$C_{11a}$' to '$C_{1mn}$', when i=1, that lay down the foundation of requirements that would allow the businesses/entities to meet their service objectives. All notations are denoted as integers and 'x' is a variable, in an embodiment of the present disclosure. A business service model can have the highest D-ETI score of 'm', where 'm' is represented by service class characteristics of the highest attainable service class level. The service classes for each dimension build on each other by their characteristics, denoted by the equation as shown in (1):

$$Service\ Class_m. Characteristics = Service\ Class_m. Characteristics + Service\ Class_{m-1}. Characteristics \tag{1}$$

Further, service class score represents the essential technologies required by the entity to meet their service objectives, such as: entity's uptime expectations, endure disruptions and maintain competitive advantages, withstand, and adapt to new risks and challenges, aligned business strategy and IT services, Scale for strategic growth, and so on. Examples of characteristics for technology alignment, may include, disjoined, siloed, connected, analytic, intelligent, autonomous, and the like. Similarly, there could be other characteristics for other dimensions as well. For the sake of brevity, the other characteristics examples are not listed. It is to be understood by a person having ordinary skill in the art or person skilled in the art that the above exemplary characteristics shall not be construed as limiting the scope of the present disclosure and may vary depending upon the implementation of the system and method in a specific environment and infrastructure.

Table 3

| Dimensions and Key Attributes | |
|---|---|
| Dimension$_1$ | Key Attribute$_{1a}$, Key Attribute$_{1b}$, ..., Key Attribute$_{1x}$ |

(continued)

| Dimensions and Key Attributes | |
|---|---|
| $Dimension_2$ | $Key\ Attribute_{2a}$, $Key\ Attribute_{2b}$, ..., $Key\ Attribute_{2x}$ |
| $Dimension_3$ | $Key\ Attribute_{3a}$, $Key\ Attribute_{3b}$, ..., $Key\ Attribute_{3x}$ |
| ... | ... |
| $Dimension_n$ | $Key\ Attribute_{na}$, $Key\ Attribute_{nb}$, ..., $Key\ Attribute_{nx}$ |

The key operational attributes of each dimension are unique and are represented in Table 3. All notations are denoted as integers. 'x' is a variable. For technology alignment as an exemplary dimension, associated key attributes could be, adaptable design, strategic alignment, sustainability, data protection, automation, interoperability, and so on. Similarly, there could be associated key attributes for other dimensions as well. For the sake of brevity, the other characteristics examples are not listed. It is to be understood by a person having ordinary skill in the art or person skilled in the art that the above exemplary associated key attributes shall not be construed as limiting the scope of the present disclosure and may vary depending upon the implementation of the system and method in a specific environment and infrastructure.

An essential technologies impact Table 4 is created comprising the dimension specific average T-ETI score across technology domains (D-ETI). Table 4 may be defined as per strategic and tactical technologies applied to business service models with the objective of meeting the business/entity service requirements.

Table 4

| Business Service Model | Essential Technologies Impact (D-ETI) Scores | | | | | Total Score (O-ETI) |
|---|---|---|---|---|---|---|
| | $Dimension_1$ | $Dimension_2$ | $Dimension_3$ | ... | $Dimension_n$ | |
| $BSM_1$ | $D\text{-}ETI_{1,1}$ | $D\text{-}ETI_{1,2}$ | $D\text{-}ETI_{1,3}$ | ... | $D\text{-}ETI_{1,n}$ | $\sum_{i=1}^{n} D-ETI_{1,i}$ |
| $BSM_2$ | $D\text{-}ETI_{2,1}$ | $D\text{-}ETI_{2,2}$ | $D\text{-}ETI_{2,3}$ | ... | $D\text{-}ETI_{2,n}$ | $\sum_{i=1}^{n} D-ETI_{2,i}$ |
| $BSM_3$ | $D\text{-}ETI_{3,1}$ | $D\text{-}ETI_{3,2}$ | $D\text{-}ETI_{3,3}$ | ... | $D\text{-}ETI_{3,n}$ | $\sum_{i=1}^{n} D-ETI_{3,i}$ |
| ... | ... | ... | ... | ... | ... | ... |
| $BSM_z$ | $D\text{-}ETI_{z,1}$ | $D\text{-}ETI_{z,2}$ | $D\text{-}ETI_{z,3}$ | ... | $D\text{-}ETI_{z,n}$ | $\sum_{i=1}^{n} D-ETI_{z,i}$ |

Here, $O\text{-}ETI_z = \sum_{i=1}^{n} D - ETI_{z,i}$ , where 'z' denotes the number of business service models, and 'n' denotes the number of dimension(s). 'i' varies from 1 to 'n'. Maximum O-ETI per business service model for 'n' dimensions = (number of dimensions 'n') multiplied by (Highest service class level 'm').

The number under each dimension in Table 4 is referred as D-ETI, dimension specific average T-ETI score across technology domains. The second ETI score (D-ETI) is based on a calculated weighted average of a plurality of data points per technology domain for each of the one or more associated technology domains. The plurality of data points is comprised in the one or more predefined tables. In other words, dimension specific ETI score for each technology domain (T-ETI) is the weighted average of data points per technology domain, gathered by the system during the assessment. D-ETI is the average of all T-ETI scores for a single dimension. This is repeated for each of the 'n' dimensions, ('n' is the total number of dimensions). Once all the D-ETI numbers are generated, the D-ETIs are summed up across the previously chosen business service model, e.g., data center, and an O-ETI for that business service model is computed/generated. In other words, the maximum attainable value of the third ETI score for each of the one or more relevant business service models is based on number of dimensions and a highest service class level comprised in the dimension-attribute table and the service class lookup table respectively. In other words, the Maximum O-ETI score is a product of number of dimensions and highest score attainable for a service class.

At step 210 of the method of the present disclosure, the one or more hardware processors 104 compute an Endurance Maturity (EM) score for each of the one or more relevant business service models based on the EIP score and the third ETI score. The EM score is an output that measures the Endurance Maturity of IT operations for a business service model, i.e., it is the IT operation's state of readiness to endure disruptions from internal and external influences by withstanding and adapting to new risks and challenges, with an aim to meet the uptime expectations of business service model and to maintain competitive advantage for the business/entity in alignment to the business strategy.

At step 212 of the method of the present disclosure, the one or more hardware processors 104 map the computed EM score of each of the one or more relevant business service models to an associated EM level table to identify (i) a current state of one or more operations in the entity to meet one or more business objectives, and (ii) a degree of confidence of the one or more operations to perform the one or more business objectives.

The steps 210 through 212 are better understood by way of following description.

The endurance maturity level by mapping the EM score to Endurance Trust Maturity Levels (ETL) using an EM-ETL table. The mapping of EM score to endurance maturity level (ETL) is done using EM-ETL table which is provided in Table 5 below. IT operations risk (IT Ops risk) is defined as the potential for an unplanned business/entity's loss/downtime or negative impact on business/entity's outcome due to the inadequacy or failure of one or more components of IT operations that includes technology, process, people/users, and governance. IT Operational Endurance (IT Ops endurance) is represented as a percentage of the maximum O-ETI. Below Table 5 illustrates the mapping of the computed EM score for each of the one or more relevant business service models to an associated EM level table.

Table 5

| Endurance Maturity Score (EM) | ETL | ETL Characteristics | Operational Trust/Endurance |
|---|---|---|---|
| EM Score Range$_1$ | Level 1 | Char$_{1a}$, Char$_{1b}$, ..., Char$_{1n}$ | Lowest |
| EM Score Range$_2$ | Level 2 | Char$_{2a}$, Char$_{2b}$, ..., Char$_{2n}$ | Low |
| EM Score Range$_3$ | Level 3 | Char$_{3a}$, Char$_{3b}$, ..., Char$_{3n}$ | Medium |
| ......................... | ........... | ........ | ...... |
| EM Score Range$_N$ | Level N | Char$_{Na}$, Char$_{Nb}$, ... , Char$_{Nn}$ | Highest |

EM scores can be aligned to the EnTRUST Maturity Levels (EML) and can be mapped to the corresponding unique characteristics defined for each level (EML) as in Table 5. All notations are denoted as integers. The Operational Trust of an IT operation for a business service model can be obtained from Table 5 by mapping the EM score ranges, the ETL levels and ETL characteristics. For example, the lowest ETL level may have lowest operational trust, i.e., inconsistent IT operations with high IT operational risks. The various levels in Table 5 may include but are not limited to, undefined, initial, managed, integrated, advanced, optimized, and the like. It is to be understood by a person having ordinary skill in the art or person skilled in the art that the above exemplary levels shall not be construed as limiting the scope of the present disclosure and may vary depending upon the implementation of the system and method in a specific environment and infrastructure.

At step 214 of the method of the present disclosure, the one or more hardware processors 104 calculate an operational endurance score for the entity based on the computed third ETI score, a maximum attainable value of the third ETI score using the identified current state of the one or more operations, and the identified degree of confidence of the one or more operations. In other words, the system 100 calculates IT operational endurance based on assessed O-ETI, maximum O-ETI that is attainable and IT operational endurance.

In an experimental implementation, the system 100 and the method of the present disclosure were implemented for an entity (e.g., say entity 1) wherein entity 1's data was obtained, and entity's Industry/Industries (i.e., Conglomerate) was identified for each Industry/Industries. Further, entity's Market Segment and business service model were established. For instance, entity, with 'y' brick-and-mortar presence stores (e.g., say 700) in the USA and UK, was considered as one of the largest retailers in the sports industry (e.g., golfing) and is regarded as the most comprehensive, one-stop shopping experience for golfers of all levels and budgets. The entity recently acquired 'm' major brands resulting in a yearly revenue of USD 'n' billion dollars. These 'y' stores are supported by 't' data centers, (e.g., 3 in the USA and 2 in the UK), 'd' distribution centers (e.g., 6) and a new online Internet presence that complements their brick-and-mortar presence. It is to be noted that the business service models can be stores, data centers, distribution centers, e-commerce, and so on.

Using appropriate lookup table as described above, EIP score for each established business service model was identified, i.e., what is the impact to the business if a particular business service model was not available, and accordingly the operational endurance of the entity was estimated/computed as follows:

It is to be noted that the expression "IT Operations risk" herein refers to as the potential for an unplanned business/entity's loss/downtime or negative impact on business/entity's outcome due to the inadequacy or failure of one or more components of IT operations that includes technology, process, people, and governance.

State of Maturity of IT Operations to meet the business objectives is calculated by the following steps: Once the 'EML' has been established, for example 'initial: High IT Ops risk and Low Ops endurance'. Further, this would equate to a degree of confidence in IT Operations to perform as expected as Low and the Current state of IT operations' service levels to meet required Operational Trust was Fragile. It is to be noted that IT Operational endurance is represented as a percentage of the maximum O-ETI. IT Operational Endurance ('x') = (Assessed O-ETI / Max O-ETI) x 100. In the example above where 'EML' was established as 'initial: High IT Ops risk and Low Ops endurance'; using the below IT Operational Endurance Scale (using above appropriate). IT Operational Endurance = (Assessed O-ETI / Max O-ETI) x 100 = (9/30) x 100= 30.

The IT Operational endurance scale was defined as Robust: Continuous, adaptive IT operations, ('a' < 'x' <= 'b'), Coherent: Connected, predictive and responsive IT operations, ('c' =< 'x' <= 'a'), Fragile: Below par, disjoined and reactive IT operations ('x' < 'c') wherein 'x' = IT Operational Endurance defined in above paragraph. Robust indicated say > x% (e.g., in this case > 80%), Coherent indicated say between value 'c' and 'a' (e.g., in this case between 50 and 80 respectively), and Fragile say < 'c' (e.g., say <50). It is to be understood by a person having ordinary skill in the art or person skilled in the art that such examples and experiments conducted and described herein shall not be construed as limiting the scope of the present disclosure.

As mentioned above, the IT operations of an entity should be agile, risk-managed and aligned with the entity's objectives and expectations from its operation model that the IT operations is catering to. However, most IT services across businesses face challenge to meet the necessary expectations of the entity and other stakeholders including regulatory bodies and end-users. The challenges in the IT operations' design, resilience, security, maintainability, technology adoptability and service governance prevent it to have a complete alignment with the entity's needs and objectives. Embodiments of the present disclosure provide system and method for assessment of IT operation endurance of an entity which considers various service classes, technical dimensions, and operational attributes. The service classes define the characteristics necessary to provide a defined IT service objective for the entity. Each of the technical dimensions, that define the service classes, have their own set of operational attributes. The service classes are scaled by a service class score that represents the Essential technologies required by the entity to meet their service objectives.

Embodiments of the present disclosure address the above technical problems by providing system and method that take into consideration the entity's prioritization of the operation model supporting its business services and utilize this prioritization factor as an input along with assessed Essential Technologies Impact score from the current state of IT operations to calculate the Endurance Maturity of the business service model with a maturity score and maturity level for enhancing endurance and trust with necessary recommendations for Essential Technologies, Processes and Governance. Moreover, the present disclosure and the system and method address the following key operational challenges that are faced by entities with assessed and measured current state of IT Operations: 1) Understanding/Identifying operational risks, 2) Growth, system scalability and performance, 3) Increasing infrastructure complexity, 4) Managing data security and compliance, 5) Achieving resilient design. The system and method can be implemented and utilized by businesses/entities across verticals, the system and method are industry agnostic/independent but can address all industry segments and operation models. The system and method can be customized based on the entity's need to help in aligning the IT services with entity's evolving requirements and for providing a robust IT operation most fit for the business/entity's conditions and scenarios.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:

    identifying, via one or more hardware processors (104), a set of entity data based on one or more responses from an entity to a plurality of queries associated with the entity (202), wherein the set of entity data comprises information associated with a plurality of entity-based industries, information associated with a plurality of business service models, and information associated with an entity identified prioritization (EIP) score for each business service model amongst the plurality of business service models, wherein the EIP score is calculated using an entity identified prioritization look up table, and wherein the EIP score represents an operational impact of the one or more relevant business service models and an associated revenue;
    identifying, via the one or more hardware processors (104), one or more technology domains associated with one or more relevant business service models of the plurality of business service models based on one or more responses from the entity to the plurality of queries (206); **characterised by**:

        computing, via the one or more hardware processors,

            (i) a first Essential Technology Impact (ETI) score for each of the one or more associated technology domains using one or more predefined tables, wherein the first ETI score' refers to a dimension specific ETI score for each Technology Domain, wherein to compute the first ETI score a subset of questions is presented to a user, wherein every question of the subset of questions has a weight factor between 0 and 1 that assigns the degree of importance and impact of the question's perspective on the IT operation's endurance,
            (ii) a second ETI score across the one or more associated technology domains using the one or more predefined tables, wherein the second ETI score refers to a dimension specific average T-ETI score across technology domains, and
            (iii) a third ETI score for each of the one or more relevant business service models based on the first ETI score and the second ETI score, wherein the third ETI score refers to one or more operation model specific cumulative D-ETI Scores (O-ETI)(208);

computing, via the one or more hardware processors (104), an Endurance Maturity (EM) score for each of the one or more relevant business service models based on the EIP score and the third ETI score (210); mapping, via the one or more hardware processors (104), the computed EM score of each of the one or more relevant business service models to an associated EM level table to identify (i) a current state of one or more operations in the entity to meet one or more business objectives, and (ii) a degree of confidence of the one or more operations to perform the one or more business objectives (212); and

calculating, via the one or more hardware processors (104), an operational endurance score for the entity based on the computed third ETI score, a maximum attainable value of the third ETI score using the identified current state of the one or more operations, and the identified degree of confidence of the one or more operations (214).

2. The processor implemented method as claimed in claim 1, wherein the second ETI score is based on a calculated weighted average of a plurality of data points per technology domain for each of the one or more associated technology domains, and wherein the plurality of data points are comprised in the one or more predefined tables.

3. The processor implemented method as claimed in claim 1, wherein the one or more predefined tables comprise a service class lookup table, a dimension-attribute table, and an ETI lookup table.

4. The processor implemented method as claimed in claim 3, wherein the maximum attainable value of the third ETI score for each of the one or more relevant business service models is based on number of dimensions and a highest service class level comprised in the dimension-attribute table and the service class lookup table respectively.

5. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

identify a set of entity data based on one or more responses from an entity to a plurality of queries associated with the entity, wherein the set of entity data comprises information associated with a plurality of entity-based industries, information associated with a plurality of business service models, and information associated with an entity identified prioritization (EIP) score for each business service model amongst the plurality of business service models, wherein the EIP score is calculated using an entity identified prioritization look up table, and wherein the EIP score represents an operational impact of the one or more relevant business service models and an associated revenue;
identify one or more technology domains associated with one or more relevant business service models of the plurality of business service models based on one or more responses from the entity to the plurality of queries; **characterised by** being further configured to:
compute (i) a first Essential Technology Impact (ETI) score for each of the one or more associated technology domains, using one or more predefined tables, wherein the first ETI score' refers to a dimension specific ETI score for each Technology Domain, wherein to compute the first ETI score a subset of questions is presented to a user, wherein every question of the subset of questions has a weight factor between 0 and 1 that assigns the degree of importance and impact of the question's perspective on the IT operation's endurance,

(ii) a second ETI score across the one or more associated technology domains, using the one or more predefined tables, wherein the second ETI score refers to a dimension specific average T-ETI score across technology domains, and
(iii) a third ETI score for each of the one or more relevant business service models based on the first ETI score and the second ETI score, using one or more predefined tables wherein the third ETI score refers to one or more operation model specific cumulative D-ETI Scores (O-ETI);

compute an Endurance Maturity (EM) score for each of the one or more relevant business service models based on the EIP score and the third ETI score;
map the computed EM score of each of the one or more relevant business service models to an associated EM level table to identify (i) a current state of one or more operations in the entity to meet one or more business objectives, and (ii) a degree of confidence of the one or more operations to perform the one or more business objectives; and

calculate an operational endurance score for the entity based on the computed third ETI score, a maximum attainable value of the third ETI score using the identified current state of the one or more operations, and the identified degree of confidence of the one or more operations.

6. The system as claim in claim 5, wherein the second ETI score is based on a calculated weighted average of a plurality of data points per technology domain for each of the one or more associated technology domains, and wherein the plurality of data points are comprised in the one or more predefined tables.

7. The system as claim in claim 5, wherein the one or more predefined tables comprise a service class lookup table, a dimension-attribute table, and an ETI lookup table.

8. The system as claim in claim 8, wherein the maximum attainable value of the third ETI score for each of the one or more relevant business service models is based on number of dimensions and a highest service class level comprised in the dimension-attribute table and the service class lookup table respectively.

9. One or more non-transitory machine-readable information storage mediums comprising one or more instructions which when executed by one or more hardware processors cause:

identifying a set of entity data based on one or more responses from an entity to a plurality of queries associated with the entity, wherein the set of entity data comprises a information associated with plurality of entity-based industries, information associated with a plurality of business service models, and information associated with an entity identified prioritization (EIP) score for each business service model amongst the plurality of business service models, wherein the EIP score is calculated using an entity identified prioritization look up table, and wherein the EIP score represents an operational impact of the one or more relevant business service models and an associated revenue;
identifying one or more technology domains associated with one or more relevant business service models of the plurality of business service models based on one or more responses from the entity to the plurality of queries;
**characterised by** the instructions further comprising:
computing (i) a first Essential Technology Impact (ETI) score for each of the one or more associated technology domains using one or more predefined tables, wherein the first ETI score' refers to a dimension specific ETI score for each Technology Domain, wherein to compute the first ETI score a subset of questions is presented to a user, wherein every question of the subset of questions has a weight factor between 0 and 1 that assigns the degree of importance and impact of the question's perspective on the IT operation's endurance,

(ii) a second ETI score across the one or more associated technology domains using the one or more predefined tables, wherein the second ETI score refers to a dimension specific average T-ETI score across technology domains, and
(iii) a third ETI score for each of the one or more relevant business service models based on the first ETI score and the second ETI score wherein the third ETI score refers to one or more operation model specific cumulative D-ETI Scores (O-ETI),;

computing an Endurance Maturity (EM) score for each of the one or more relevant business service models based on the EIP score and the third ETI score;
mapping the computed EM score of each of the one or more relevant business service models to an associated EM level table to identify (i) a current state of one or more operations in the entity to meet one or more business objectives, and (ii) a degree of confidence of the one or more operations to perform the one or more business objectives; and
calculating an operational endurance score for the entity based on the computed third ETI score, a maximum attainable value of the third ETI score using the identified current state of the one or more operations, and the identified degree of confidence of the one or more operations.

10. The one or more non-transitory machine-readable information storage mediums as claimed in claim 9, wherein the second ETI score is based on a calculated weighted average of a plurality of data points per technology domain for each of the one or more associated technology domains, and wherein the plurality of data points are comprised in the one or more predefined tables.

11. The one or more non-transitory machine-readable information storage mediums as claimed in claim 9, wherein the one or more predefined tables comprise a service class lookup table, a dimension-attribute table, and an ETI lookup table.

12. The one or more non-transitory machine-readable information storage mediums as claimed in claim 11, wherein the maximum attainable value of the third ETI score for each of the one or more relevant business service models is based on number of dimensions and a highest service class level comprised in the dimension-attribute table and the service class lookup table respectively.

**Patentansprüche**

1. Prozessorimplementiertes Verfahren (200), umfassend:

Identifizieren, über einen oder mehrere Hardwareprozessoren (104), eines Satzes von Entitätsdaten basierend auf einer oder mehreren Antworten von einer Entität auf eine Mehrzahl von Abfragen, die mit der Entität (202) assoziiert sind, wobei der Satz von Entitätsdaten Informationen umfasst, die mit einer Mehrzahl von entitätsbasierten Industrien assoziiert sind, Informationen, die mit einer Mehrzahl von Geschäftsdienstmodellen assoziiert sind, und Informationen, die mit einer Entitäts-identifizierte-Priorisierung-(EIP)-Punktzahl für jedes Geschäftsdienstmodell unter der Mehrzahl von Geschäftsdienstmodellen assoziiert sind, wobei die EIP-Punktzahl unter Verwendung einer Entitäts-identifizierte-Priorisierung-Nachschlagetabelle berechnet wird, und wobei die EIP-Punktzahl eine Betriebsauswirkung des einen oder der mehreren relevanten Geschäftsdienstmodelle und einen assoziierten Umsatz darstellt;
Identifizieren, über den einen oder die mehreren Hardwareprozessoren (104), einer oder mehrerer Technologiedomänen, die mit einem oder mehreren relevanten Geschäftsdienstmodellen der Mehrzahl von Geschäftsdienstmodellen assoziiert sind, basierend auf einer oder mehreren Antworten von der Entität auf die Mehrzahl von Abfragen (206); **gekennzeichnet durch**:
Berechnen, über den einen oder die mehreren Hardwareprozessoren,

(i) einer ersten Wesentliche-Technologie-Auswirkung-(ETI)-Punktzahl für jede der einen oder mehreren assoziierten Technologiedomänen unter Verwendung einer oder mehrerer vordefinierter Tabellen, wobei sich die erste ETI-Punktzahl auf eine dimensionsspezifische ETI-Punktzahl für jede Technologiedomäne bezieht, wobei zum Berechnen der ersten ETI-Punktzahl eine Teilmenge von Fragen einem Benutzer präsentiert wird, wobei jede Frage der Teilmenge von Fragen einen Gewichtungsfaktor zwischen 0 und 1 aufweist, der den Grad der Wichtigkeit und Auswirkung der Perspektive der Frage auf die Ausdauer des IT-Betriebs zuweist,
(ii) einer zweiten ETI-Punktzahl über die eine oder mehreren assoziierten Technologiedomänen unter Verwendung der einen oder mehreren vordefinierten Tabellen, wobei sich die zweite ETI-Punktzahl auf eine dimensionsspezifische durchschnittliche T-ETI-Punktzahl über Technologiedomänen bezieht, und
(iii) einer dritten ETI-Punktzahl für jedes des einen oder der mehreren relevanten Geschäftsdienstmodelle basierend auf der ersten ETI-Punktzahl und der zweiten ETI-Punktzahl, wobei sich die dritte ETI-Punktzahl auf einen oder mehrere betriebsmodellspezifische kumulative D-ETI-Punktzahlen (O-ETI) (208) bezieht;

Berechnen, über den einen oder die mehreren Hardwareprozessoren (104), einer Ausdauer-Reife-(EM)-Punktzahl für jedes des einen oder der mehreren relevanten Geschäftsdienstmodelle basierend auf der EIP-Punktzahl und der dritten ETI-Punktzahl (210);
Abbilden, über den einen oder die mehreren Hardwareprozessoren (104), der berechneten EM-Punktzahl jedes des einen oder der mehreren relevanten Geschäftsdienstmodelle auf eine assoziierte EM-Ebenentabelle, um (i) einen aktuellen Zustand eines oder mehrerer Vorgänge in der Entität zu identifizieren, um ein oder mehrere Geschäftsziele zu erreichen, und (ii) einen Vertrauensgrad des einen oder der mehreren Vorgänge, um das eine oder die mehreren Geschäftsziele durchzuführen (212); und
Berechnen, über den einen oder die mehreren Hardwareprozessoren (104), einer Betriebsausdauer-Punktzahl für die Entität basierend auf der berechneten dritten ETI-Punktzahl, einem maximal erreichbaren Wert der dritten ETI-Punktzahl unter Verwendung des identifizierten aktuellen Zustands des einen oder der mehreren Vorgänge und des identifizierten Vertrauensgrads des einen oder der mehreren Vorgänge (214).

2. Prozessorimplementiertes Verfahren nach Anspruch 1, wobei die zweite ETI-Punktzahl auf einem berechneten gewichteten Durchschnitt einer Mehrzahl von Datenpunkten pro Technologiedomäne für jede der einen oder mehreren assoziierten Technologiedomänen basiert, und wobei die Mehrzahl von Datenpunkten in der einen oder den mehreren vordefinierten Tabellen enthalten ist.

3. Prozessorimplementiertes Verfahren nach Anspruch 1, wobei die eine oder die mehreren vordefinierten Tabellen eine Dienstklassennachschlagetabelle, eine Dimensionsattributtabelle und eine ETI-Nachschlagetabelle umfassen.

4. Prozessorimplementiertes Verfahren nach Anspruch 3, wobei der maximal erreichbare Wert der dritten ETI-Punktzahl für jedes des einen oder der mehreren relevanten Geschäftsdienstmodelle auf einer Anzahl von Dimensionen und einer höchsten Dienstklassenebene basiert, die in der Dimensionsattributtabelle bzw. der Dienstklassennachschlagetabelle enthalten sind.

5. System (100), umfassend:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:

Identifizieren eines Satzes von Entitätsdaten basierend auf einer oder mehreren Antworten von einer Entität auf eine Mehrzahl von Abfragen, die mit der Entität assoziiert sind, wobei der Satz von Entitätsdaten Informationen umfasst, die mit einer Mehrzahl von entitätsbasierten Industrien assoziiert sind, Informationen, die mit einer Mehrzahl von Geschäftsdienstmodellen assoziiert sind, und Informationen, die mit einer Entitäts-identifizierte-Priorisierung-(EIP)-Punktzahl für jedes Geschäftsdienstmodell unter der Mehrzahl von Geschäftsdienstmodellen assoziiert sind, wobei die EIP-Punktzahl unter Verwendung einer Entitäts-identifizierte-Priorisierung-Nachschlagetabelle berechnet wird, und wobei die EIP-Punktzahl eine Betriebsauswirkung des einen oder der mehreren relevanten Geschäftsdienstmodelle und einen assoziierten Umsatz darstellt;
Identifizieren einer oder mehrerer Technologiedomänen, die mit einem oder mehreren relevanten Geschäftsdienstmodellen der Mehrzahl von Geschäftsdienstmodellen assoziiert sind, basierend auf einer oder mehreren Antworten von der Entität auf die Mehrzahl von Abfragen; **dadurch gekennzeichnet, dass** es ferner konfiguriert ist zum:
Berechnen (i) einer ersten Wesentliche-Technologie-Auswirkung-(ETI)-Punktzahl für jede der einen oder mehreren assoziierten Technologiedomänen unter Verwendung einer oder mehrerer vordefinierter Tabellen, wobei sich die erste ETI-Punktzahl auf eine dimensionsspezifische ETI-Punktzahl für jede Technologiedomäne bezieht, wobei zum Berechnen der ersten ETI-Punktzahl eine Teilmenge von Fragen einem Benutzer präsentiert wird, wobei jede Frage der Teilmenge von Fragen einen Gewichtungsfaktor zwischen 0 und 1 aufweist, der den Grad der Wichtigkeit und Auswirkung der Perspektive der Frage auf die Ausdauer des IT-Betriebs zuweist,

(ii) einer zweiten ETI-Punktzahl über die eine oder mehreren assoziierten Technologiedomänen unter Verwendung der einen oder mehreren vordefinierten Tabellen, wobei sich die zweite ETI-Punktzahl auf eine dimensionsspezifische durchschnittliche T-ETI-Punktzahl über Technologiedomänen bezieht, und
(iii) einer dritten ETI-Punktzahl für jedes des einen oder der mehreren relevanten Geschäftsdienstmodelle basierend auf der ersten ETI-Punktzahl und der zweiten ETI-Punktzahl unter Verwendung einer oder mehrerer vordefinierter Tabellen, wobei sich die dritte ETI-Punktzahl auf einen oder mehrere betriebsmodellspezifische kumulative D-ETI-Punktzahlen (O-ETI) bezieht;

Berechnen einer Ausdauer-Reife-(EM)-Punktzahl für jedes des einen oder der mehreren relevanten Geschäftsdienstmodelle basierend auf der EIP-Punktzahl und der dritten ETI-Punktzahl;
Abbilden der berechneten EM-Punktzahl jedes des einen oder der mehreren relevanten Geschäftsdienstmodelle auf eine assoziierte EM-Ebenentabelle, um (i) einen aktuellen Zustand eines oder mehrerer Vorgänge in der Entität zu identifizieren, um ein oder mehrere Geschäftsziele zu erreichen, und (ii) einen Vertrauensgrad des einen oder der mehreren Vorgänge, um das eine oder die mehreren Geschäftsziele durchzuführen; und
Berechnen einer Betriebsausdauer-Punktzahl für die Entität basierend auf der berechneten dritten ETI-Punktzahl, einem maximal erreichbaren Wert der dritten ETI-Punktzahl unter Verwendung des identifizierten aktuellen Zustands des einen oder der mehreren Vorgänge und des identifizierten Vertrauensgrads des einen oder der mehreren Vorgänge.

6. System nach Anspruch 5, wobei die zweite ETI-Punktzahl auf einem berechneten gewichteten Durchschnitt einer Mehrzahl von Datenpunkten pro Technologiedomäne für jede der einen oder mehreren assoziierten Technologiedomänen basiert, und wobei die Mehrzahl von Datenpunkten in der einen oder den mehreren vordefinierten Tabellen enthalten ist.

7. System nach Anspruch 5, wobei die eine oder die mehreren vordefinierten Tabellen eine Dienstklassennachschlagetabelle, eine Dimensionsattributtabelle und eine ETI-Nachschlagetabelle umfassen.

8. System nach Anspruch 8, wobei der maximal erreichbare Wert der dritten ETI-Punktzahl für jedes des einen oder der mehreren relevanten Geschäftsdienstmodelle auf einer Anzahl von Dimensionen und einer höchsten Dienstklassenebene basiert, die in der Dimensionsattributtabelle bzw. der Dienstklassennachschlagetabelle enthalten sind.

9. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:

Identifizieren eines Satzes von Entitätsdaten basierend auf einer oder mehreren Antworten von einer Entität auf eine Mehrzahl von Abfragen, die mit der Entität assoziiert sind, wobei der Satz von Entitätsdaten Informationen umfasst, die mit einer Mehrzahl von entitätsbasierten Industrien assoziiert sind, Informationen, die mit einer Mehrzahl von Geschäftsdienstmodellen assoziiert sind, und Informationen, die mit einer Entitäts-identifizierte-Priorisierung-(EIP)-Punktzahl für jedes Geschäftsdienstmodell unter der Mehrzahl von Geschäftsdienstmodellen assoziiert sind, wobei die EIP-Punktzahl unter Verwendung einer Entitäts-identifizierte-Priorisierung-Nachschlagetabelle berechnet wird, und wobei die EIP-Punktzahl eine Betriebsauswirkung des einen oder der mehreren relevanten Geschäftsdienstmodelle und einen assoziierten Umsatz darstellt;
Identifizieren einer oder mehrerer Technologiedomänen, die mit einem oder mehreren relevanten Geschäftsdienstmodellen der Mehrzahl von Geschäftsdienstmodellen assoziiert sind, basierend auf einer oder mehreren Antworten von der Entität auf die Mehrzahl von Abfragen; **dadurch gekennzeichnet, dass** die Anweisungen ferner umfassen:
Berechnen (i) einer ersten Wesentliche-Technologie-Auswirkung-(ETI)-Punktzahl für jede der einen oder mehreren assoziierten Technologiedomänen unter Verwendung einer oder mehrerer vordefinierter Tabellen, wobei sich die erste ETI-Punktzahl auf eine dimensionsspezifische ETI-Punktzahl für jede Technologiedomäne bezieht, wobei zum Berechnen der ersten ETI-Punktzahl eine Teilmenge von Fragen einem Benutzer präsentiert wird, wobei jede Frage der Teilmenge von Fragen einen Gewichtungsfaktor zwischen 0 und 1 aufweist, der den Grad der Wichtigkeit und Auswirkung der Perspektive der Frage auf die Ausdauer des IT-Betriebs zuweist,

(ii) einer zweiten ETI-Punktzahl über die eine oder mehreren assoziierten Technologiedomänen unter Verwendung der einen oder mehreren vordefinierten Tabellen, wobei sich die zweite ETI-Punktzahl auf eine dimensionsspezifische durchschnittliche T-ETI-Punktzahl über Technologiedomänen bezieht, und
(iii) einer dritten ETI-Punktzahl für jedes des einen oder der mehreren relevanten Geschäftsdienstmodelle basierend auf der ersten ETI-Punktzahl und der zweiten ETI-Punktzahl, wobei sich die dritte ETI-Punktzahl auf einen oder mehrere betriebsmodellspezifische kumulative D-ETI-Punktzahlen (O-ETI) bezieht;

Berechnen einer Ausdauer-Reife-(EM)-Punktzahl für jedes des einen oder der mehreren relevanten Geschäftsdienstmodelle basierend auf der EIP-Punktzahl und der dritten ETI-Punktzahl;
Abbilden der berechneten EM-Punktzahl jedes des einen oder der mehreren relevanten Geschäftsdienstmodelle auf eine assoziierte EM-Ebenentabelle, um (i) einen aktuellen Zustand eines oder mehrerer Vorgänge in der Entität zu identifizieren, um ein oder mehrere Geschäftsziele zu erreichen, und (ii) einen Vertrauensgrad des einen oder der mehreren Vorgänge, um das eine oder die mehreren Geschäftsziele durchzuführen; und
Berechnen einer Betriebsausdauer-Punktzahl für die Entität basierend auf der berechneten dritten ETI-Punktzahl, einem maximal erreichbaren Wert der dritten ETI-Punktzahl unter Verwendung des identifizierten aktuellen Zustands des einen oder der mehreren Vorgänge und des identifizierten Vertrauensgrads des einen oder der mehreren Vorgänge.

10. Ein oder mehrere nichtflüchtige maschinenlesbare Informationsspeichermedien nach Anspruch 9, wobei die zweite ETI-Punktzahl auf einem berechneten gewichteten Durchschnitt einer Mehrzahl von Datenpunkten pro Technologiedomäne für jede der einen oder mehreren assoziierten Technologiedomänen basiert, und wobei die Mehrzahl von Datenpunkten in der einen oder den mehreren vordefinierten Tabellen enthalten ist.

11. Ein oder mehrere nichtflüchtige maschinenlesbare Informationsspeichermedien nach Anspruch 9, wobei die eine oder die mehreren vordefinierten Tabellen eine Dienstklassennachschlagetabelle, eine Dimensionsattributtabelle und eine ETI-Nachschlagetabelle umfassen.

12. Ein oder mehrere nichtflüchtige maschinenlesbare Informationsspeichermedien nach Anspruch 11, wobei der maximal erreichbare Wert der dritten ETI-Punktzahl für jedes des einen oder der mehreren relevanten Geschäftsdienstmodelle auf einer Anzahl von Dimensionen und einer höchsten Dienstklassenebene basiert, die in der Dimensionsattributtabelle bzw. der Dienstklassennachschlagetabelle enthalten sind.

## Revendications

1. Procédé mis en œuvre par processeur (200), comprenant :

l'identification, par l'intermédiaire d'un ou plusieurs processeurs matériels (104), d'un ensemble de données d'entité sur la base d'une ou plusieurs réponses d'une entité à une pluralité d'interrogations associées à l'entité (202), dans lequel l'ensemble de données d'entité comprend des informations associées à une pluralité d'industries basées sur des entités, des informations associées à une pluralité de modèles de service d'entreprise, et des informations associées à un score de priorisation identifiée par l'entité (EIP) pour chaque modèle de service d'entreprise parmi la pluralité de modèles de service d'entreprise, dans lequel le score EIP est calculé en utilisant une table de consultation de priorisation identifiée par l'entité, et dans lequel le score EIP représente un impact opérationnel des un ou plusieurs modèles de service d'entreprise pertinents et un revenu associé ;
l'identification, par l'intermédiaire des un ou plusieurs processeurs matériels (104), d'un ou plusieurs domaines technologiques associés à un ou plusieurs modèles de service d'entreprise pertinents de la pluralité de modèles de service d'entreprise sur la base d'une ou plusieurs réponses de l'entité à la pluralité d'interrogations (206) ;
**caractérisé par** :
le calcul, par l'intermédiaire des un ou plusieurs processeurs matériels,

(i) d'un premier score d'impact technologique essentiel (ETI) pour chacun des un ou plusieurs domaines technologiques associés en utilisant une ou plusieurs tables prédéfinies, dans lequel le premier score d'ETI fait référence à un score d'ETI spécifique à une dimension pour chaque domaine technologique, dans lequel pour calculer le premier score d'ETI un sous-ensemble de questions est présenté à un utilisateur, dans lequel chaque question du sous-ensemble de questions a un facteur de pondération entre 0 et 1 qui attribue le degré d'importance et d'impact de la perspective de la question sur l'endurance de l'opération IT,
(ii) d'un deuxième score d'ETI à travers les un ou plusieurs domaines technologiques associés en utilisant les une ou plusieurs tables prédéfinies, dans lequel le deuxième score d'ETI fait référence à un score T-ETI moyen spécifique à une dimension à travers les domaines technologiques, et
(iii) d'un troisième score d'ETI pour chacun des un ou plusieurs modèles de service d'entreprise pertinents sur la base du premier score d'ETI et du deuxième score d'ETI, dans lequel le troisième score d'ETI fait référence à un ou plusieurs scores D-ETI (O-ETI) cumulatifs spécifiques à un modèle opérationnel (208) ;

le calcul, par l'intermédiaire des un ou plusieurs processeurs matériels (104), d'un score de maturité d'endurance (EM) pour chacun des un ou plusieurs modèles de service d'entreprise pertinents sur la base du score EIP et du troisième score d'ETI (210) ;
la mise en correspondance, par l'intermédiaire des un ou plusieurs processeurs matériels (104), du score EM calculé de chacun des un ou plusieurs modèles de service d'entreprise pertinents avec une table de niveau EM associée pour identifier (i) un état actuel d'une ou plusieurs opérations dans l'entité pour répondre à un ou plusieurs objectifs d'entreprise, et (ii) un degré de confiance des une ou plusieurs opérations pour réaliser les un ou plusieurs objectifs d'entreprise (212) ; et
le calcul, par l'intermédiaire des un ou plusieurs processeurs matériels (104), d'un score d'endurance opérationnelle pour l'entité sur la base du troisième score d'ETI calculé, d'une valeur maximale atteignable du troisième score d'ETI en utilisant l'état actuel identifié des une ou plusieurs opérations, et du degré de confiance identifié des une ou plusieurs opérations (214).

2. Procédé mis en œuvre par processeur selon la revendication 1, dans lequel le deuxième score d'ETI est basé sur une moyenne pondérée calculée d'une pluralité de points de données par domaine technologique pour chacun des un ou plusieurs domaines technologiques associés, et dans lequel la pluralité de points de données sont compris dans les une ou plusieurs tables prédéfinies.

3. Procédé mis en œuvre par processeur selon la revendication 1, dans lequel les une ou plusieurs tables prédéfinies comprennent une table de consultation de classe de service, une table d'attributs de dimension, et une table de consultation d'ETI.

4. Procédé mis en œuvre par processeur selon la revendication 3, dans lequel la valeur maximale atteignable du troisième score d'ETI pour chacun des un ou plusieurs modèles de service d'entreprise pertinents est basée sur le nombre de dimensions et un niveau de classe de service le plus élevé compris dans la table d'attributs de dimension et la table de consultation de classe de service respectivement.

5. Système (100), comprenant :

une mémoire (102) stockant des instructions ;
une ou plusieurs interfaces de communication (106) ; et
un ou plusieurs processeurs matériels (104) couplés à la mémoire (102) par l'intermédiaire des une ou plusieurs interfaces de communication (106), dans lequel les un ou plusieurs processeurs matériels (104) sont configurés par les instructions pour :

identifier un ensemble de données d'entité sur la base d'une ou plusieurs réponses d'une entité à une pluralité d'interrogations associées à l'entité, dans lequel l'ensemble de données d'entité comprend des informations associées à une pluralité d'industries basées sur des entités, des informations associées à une pluralité de modèles de service d'entreprise, et des informations associées à un score de priorisation identifiée par l'entité (EIP) pour chaque modèle de service d'entreprise parmi la pluralité de modèles de service d'entreprise, dans lequel le score EIP est calculé en utilisant une table de consultation de priorisation identifiée par l'entité, et dans lequel le score EIP représente un impact opérationnel des un ou plusieurs modèles de service d'entreprise pertinents et un revenu associé ;
identifier un ou plusieurs domaines technologiques associés à un ou plusieurs modèles de service d'entreprise pertinents de la pluralité de modèles de service d'entreprise sur la base d'une ou plusieurs réponses de l'entité à la pluralité d'interrogations ; **caractérisé en ce qu'**il est en outre configuré pour :
calculer (i) un premier score d'impact technologique essentiel (ETI) pour chacun des un ou plusieurs domaines technologiques associés, en utilisant une ou plusieurs tables prédéfinies, dans lequel le premier score d'ETI fait référence à un score d'ETI spécifique à une dimension pour chaque domaine technologique, dans lequel pour calculer le premier score d'ETI un sous-ensemble de questions est présenté à un utilisateur, dans lequel chaque question du sous-ensemble de questions a un facteur de pondération entre 0 et 1 qui attribue le degré d'importance et d'impact de la perspective de la question sur l'endurance de l'opération IT,

(ii) d'un deuxième score d'ETI à travers les un ou plusieurs domaines technologiques associés, en utilisant les une ou plusieurs tables prédéfinies, dans lequel le deuxième score d'ETI fait référence à un score T-ETI moyen spécifique à une dimension à travers les domaines technologiques, et
(iii) d'un troisième score d'ETI pour chacun des un ou plusieurs modèles de service d'entreprise pertinents sur la base du premier score d'ETI et du deuxième score d'ETI, en utilisant une ou plusieurs tables prédéfinies dans lequel le troisième score d'ETI fait référence à un ou plusieurs scores D-ETI (O-ETI) cumulatifs spécifiques à un modèle opérationnel ;

calculer un score de maturité d'endurance (EM) pour chacun des un ou plusieurs modèles de service d'entreprise pertinents sur la base du score EIP et du troisième score d'ETI;
mettre en correspondance le score EM calculé de chacun des un ou plusieurs modèles de service d'entreprise pertinents avec une table de niveau EM associée pour identifier (i) un état actuel d'une ou plusieurs opérations dans l'entité pour répondre à un ou plusieurs objectifs d'entreprise, et (ii) un degré de confiance des une ou plusieurs opérations pour réaliser les un ou plusieurs objectifs d'entreprise ; et
calculer un score d'endurance opérationnelle pour l'entité sur la base du troisième score d'ETI calculé, d'une valeur maximale atteignable du troisième score d'ETI en utilisant l'état actuel identifié des une ou plusieurs opérations, et du degré de confiance identifié des une ou plusieurs opérations.

6. Système selon la revendication 5, dans lequel le deuxième score d'ETI est basé sur une moyenne pondérée calculée d'une pluralité de points de données par domaine technologique pour chacun des un ou plusieurs domaines technologiques associés, et dans lequel la pluralité de points de données sont compris dans les une ou plusieurs tables prédéfinies.

7. Système selon la revendication 5, dans lequel les une ou plusieurs tables prédéfinies comprennent une table de consultation de classe de service, une table d'attributs de dimension, et une table de consultation d'ETI.

8.  Système selon la revendication 8, dans lequel la valeur maximale atteignable du troisième score d'ETI pour chacun des un ou plusieurs modèles de service d'entreprise pertinents est basée sur le nombre de dimensions et un niveau de classe de service le plus élevé compris dans la table d'attributs de dimension et la table de consultation de classe de service respectivement.

9.  Un ou plusieurs supports de stockage d'informations lisibles par machine non transitoires comprenant une ou plusieurs instructions qui, lorsqu'elles sont exécutées par un ou plusieurs processeurs matériels, amènent :

    l'identification d'un ensemble de données d'entité sur la base d'une ou plusieurs réponses d'une entité à une pluralité d'interrogations associées à l'entité, dans lequel l'ensemble de données d'entité comprend des informations associées à une pluralité d'industries basées sur des entités, des informations associées à une pluralité de modèles de service d'entreprise, et des informations associées à un score de priorisation identifiée par l'entité (EIP) pour chaque modèle de service d'entreprise parmi la pluralité de modèles de service d'entreprise, dans lequel le score EIP est calculé en utilisant une table de consultation de priorisation identifiée par l'entité, et dans lequel le score EIP représente un impact opérationnel des un ou plusieurs modèles de service d'entreprise pertinents et un revenu associé ;
    l'identification d'un ou plusieurs domaines technologiques associés à un ou plusieurs modèles de service d'entreprise pertinents de la pluralité de modèles de service d'entreprise sur la base d'une ou plusieurs réponses de l'entité à la pluralité d'interrogations ; **caractérisé en ce que** les instructions comprennent en outre :
    le calcul (i) d'un premier score d'impact technologique essentiel (ETI) pour chacun des un ou plusieurs domaines technologiques associés en utilisant une ou plusieurs tables prédéfinies, dans lequel le premier score d'ETI fait référence à un score d'ETI spécifique à une dimension pour chaque domaine technologique, dans lequel pour calculer le premier score d'ETI un sous-ensemble de questions est présenté à un utilisateur, dans lequel chaque question du sous-ensemble de questions a un facteur de pondération entre 0 et 1 qui attribue le degré d'importance et d'impact de la perspective de la question sur l'endurance de l'opération IT,

    (ii) d'un deuxième score d'ETI à travers les un ou plusieurs domaines technologiques associés en utilisant les une ou plusieurs tables prédéfinies, dans lequel le deuxième score d'ETI fait référence à un score T-ETI moyen spécifique à une dimension à travers les domaines technologiques, et
    (iii) d'un troisième score d'ETI pour chacun des un ou plusieurs modèles de service d'entreprise pertinents sur la base du premier score d'ETI et du deuxième score d'ETI, dans lequel le troisième score d'ETI fait référence à un ou plusieurs scores D-ETI (O-ETI) cumulatifs spécifiques à un modèle opérationnel ;

    le calcul d'un score de maturité d'endurance (EM) pour chacun des un ou plusieurs modèles de service d'entreprise pertinents sur la base du score EIP et du troisième score d'ETI;
    la mise en correspondance du score EM calculé de chacun des un ou plusieurs modèles de service d'entreprise pertinents avec une table de niveau EM associée pour identifier (i) un état actuel d'une ou plusieurs opérations dans l'entité pour répondre à un ou plusieurs objectifs d'entreprise, et (ii) un degré de confiance des une ou plusieurs opérations pour réaliser les un ou plusieurs objectifs d'entreprise ; et
    le calcul d'un score d'endurance opérationnelle pour l'entité sur la base du troisième score d'ETI calculé, d'une valeur maximale atteignable du troisième score d'ETI en utilisant l'état actuel identifié des une ou plusieurs opérations, et du degré de confiance identifié des une ou plusieurs opérations.

10. Un ou plusieurs supports de stockage d'informations lisibles par machine non transitoires selon la revendication 9, dans lequel le deuxième score d'ETI est basé sur une moyenne pondérée calculée d'une pluralité de points de données par domaine technologique pour chacun des un ou plusieurs domaines technologiques associés, et dans lequel la pluralité de points de données sont compris dans les une ou plusieurs tables prédéfinies.

11. Un ou plusieurs supports de stockage d'informations lisibles par machine non transitoires selon la revendication 9, dans lequel les une ou plusieurs tables prédéfinies comprennent une table de consultation de classe de service, une table d'attributs de dimension, et une table de consultation d'ETI.

12. Un ou plusieurs supports de stockage d'informations lisibles par machine non transitoires selon la revendication 11, dans lequel la valeur maximale atteignable du troisième score d'ETI pour chacun des un ou plusieurs modèles de service d'entreprise pertinents est basée sur le nombre de dimensions et un niveau de classe de service le plus élevé compris dans la table d'attributs de dimension et la table de consultation de classe de service respectivement.

SYSTEM
100

MEMORY
102

DATABASE
108

HARDWARE
PROCESSOR(S)
104

INTERFACE(S)
106

**FIG. 1**

identifying a set of entity data based on one or more responses from an entity to a plurality of queries associated with the entity 〜 202

↓

identifying one or more relevant business service models amongst the plurality of business service models and the associated EIP score 〜 204

↓

identifying one or more technology domains associated with the one or more relevant business service models based on one or more responses from the entity to the plurality of queries 〜 206

↓

computing (i) a first Essential Technology Impact (ETI) score for each of the one or more associated technology domains, and (ii) a second ETI score across the one or more associated technology domains, and (iii) a third ETI score for each of the one or more relevant business service models based on the first ETI score and the second ETI score, using one or more predefined tables 〜 208

↓

computing an Endurance Maturity (EM) score for each of the one or more relevant business service models based on the EIP score and the third ETI score 〜 210

↓

mapping the computed EM score of each of the one or more relevant business service models to an associated EM level table to identify (i) a current state of one or more operations in the entity to meet one or more business objectives, and (ii) a degree of confidence of the one or more operations to perform the one or more business objectives 〜 212

↓

calculating an operational endurance score for the entity based on the computed third ETI score, a maximum attainable value of the third ETI score using the identified current state of the one or more operations, and the identified degree of confidence of the one or more operations 〜 214

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321034114
- US 2018114271 A1